# EUROPEAN PATENT APPLICATION

(11) **EP 4 443 735 A1**
(43) Date of publication of application: **09.10.2024**
(21) Application number: 23275059.6
(22) Date of filing: 06.04.2023
(51) Int. Cl.: H02M 7/483, H02M 7/487, H02M 7/00, H02M 1/00, G01R 15/14

(54) **MULTILEVEL POWER CONVERTER**

(71) Applicant: Hamilton Sundstrand Corporation, Charlotte, NC 28217 (US)
(72) Inventor: POPEK, Grzegorz Ryszard, Birmingham, B14 5QH (GB); KULSANGCHAROEN, Ponggorn, Solihull, B90 3ET (GB)
(74) Representative: Dehns

(57) **Abstract**

A multilevel power converter comprising: a DC bus having a positive terminal and a negative terminal; a plurality of switches for each of a plurality of phase legs of the power converter connected between the positive terminal and the negative terminal, each power leg having an output for provided a converted voltage output according to the switching control of the plurality of switches; and one or more current sensors (4), wherein at least two of the switches, or at least one of the switches and a current sensor, and/or at least two current sensors are connected as a cluster to share a common power supply.

## Description

### TECHNICAL FIELD

The present disclosure relates to power converters and methods of designing power converter topologies.

### BACKGROUND

Power converters are used in many fields to convert one form of power to another to drive one or more loads. For example, power converters may convert ac power to one or more levels of dc power output or may convert one level of dc power to one or more other levels of dc output as required by the load(s) to be driven.

Two-level power converters are known to provide an output power of + or - of a capacitor voltage level. Multilevel power converters were developed to provide multiple voltage levels at the converter output and are able to reach higher dc link voltage levels. More recent developments in multilevel power converter design has resulted in improved efficiency, lower dv/dt leading to lower EMI effects, reduced transmission line effects and improved input power quality. Multilevel power converters comprise a plurality of converter modules including semiconductor switches. In isolated power converters, isolated are being connected in series. Various power converter topologies (e.g. T-type, H-type, etc.) are known. Non-isolated power converters are also known, with various topologies including 'diode neutral point clamp' (DNPC), T-type neutral point clamp' (TNPC), active neutral point clamp' (ANPC) and with flying capacitors. The switches in the modules each require a power supply or gate driver circuit and insulation barriers are required between the different modules. As multilevel power converters get more complex, with more levels, the risk of a switch being faulty and causing an open circuit or short circuit fault increases. If multiple modules are 'on' at the same time, this can result in a surge of current through the circuit (shoot-through). The current through the power converter therefore needs to be monitored to detect a dc link short circuit or 'shoot-through'. The current is typically sensed by current sensors e.g. resistors in each of the output lines and these current sensors also require power.

Further, the more levels a converter has, the greater the number of modules and switches and, correspondingly, the number of power supplies and isolation barriers. These greatly adds to the overall size, weight and cost of the power converter.

While such multilevel power converters have been found to be efficient and reliable, there is a desire for an improved power converter scheme which is simpler than current designs and has reduced power supply and insulation barrier requirements whilst still reliably monitoring current and protecting against shoot-through.

### SUMMARY

According to this disclosure, there is provided method of designing a multilevel power converter having a DC bus with a positive terminal and a negative terminal, a plurality of switches between the DC bus and a plurality of outputs, and one or more current sensors, whereby one or more switches and/or one or more current sensors are grouped in clusters sharing a common power supply, and there is also provided a multilevel power converter comprising: a DC bus having a positive terminal and a negative terminal; a plurality of switches for each of a plurality of phase legs of the power converter connected between the positive terminal and the negative terminal, each power leg having an output for provided a converted voltage output according to the switching control of the plurality of switches; and one or more current sensors (4), wherein at least two of the switches, or at least one of the switches and a current sensor, and/or at least two current sensors are connected as a cluster to share a common power supply.

### BRIEF DESCRIPTION

Examples of the multilevel power converter scheme according to the disclosure will be described with reference to the drawings. It should be noted that variations are possible within the scope of the claims. For example, the drawings and description present the solution in relation to specific examples of power converter topology but these are only examples, and the solution of the disclosure can also be applied to other multilevel power converter topologies.
Figure 1 is a schematic diagram of a circuit topology of a known three-phase two-level power converter.
Figure 2 shows a 'reduced' version of Fig. 1.
Figure 3 is a schematic diagram of a circuit topology of a known three-phase three-level T-type NPC power converter.
Figure 4 shows a 'reduced' version of Fig. 3.
Figure 5 is a schematic diagram of a circuit topology of a known three-phase three-level D-type NPC power converter.
Figure 6 is a 'reduced' version of Fig. 5.
Figure 7 shows how the solution of this disclosure can be applied to a power converter as shown in Fig. 3.
Figure 8 shows an alternative topology that can be clustered according to the disclosure.
Figure 9 shows an alternative clustering according to the disclosure.
Figure 10 shows another alternative clustering according to the disclosure

### DETAILED DESCRIPTION

The general operation and different possible topologies of two-level and multilevel power converters are now well-known and well understood. Power semiconductor switches are arranged as modules in phase legs and the switches are switched on and off according to a control scheme to provide the required multiple level outputs.

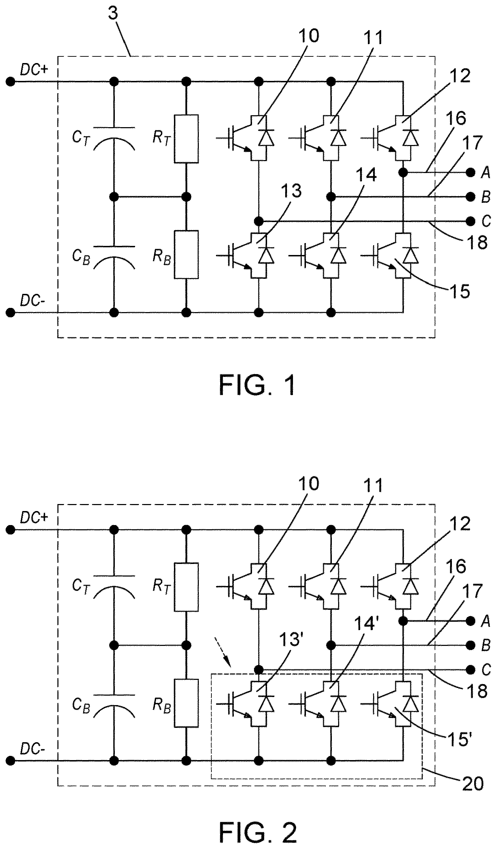

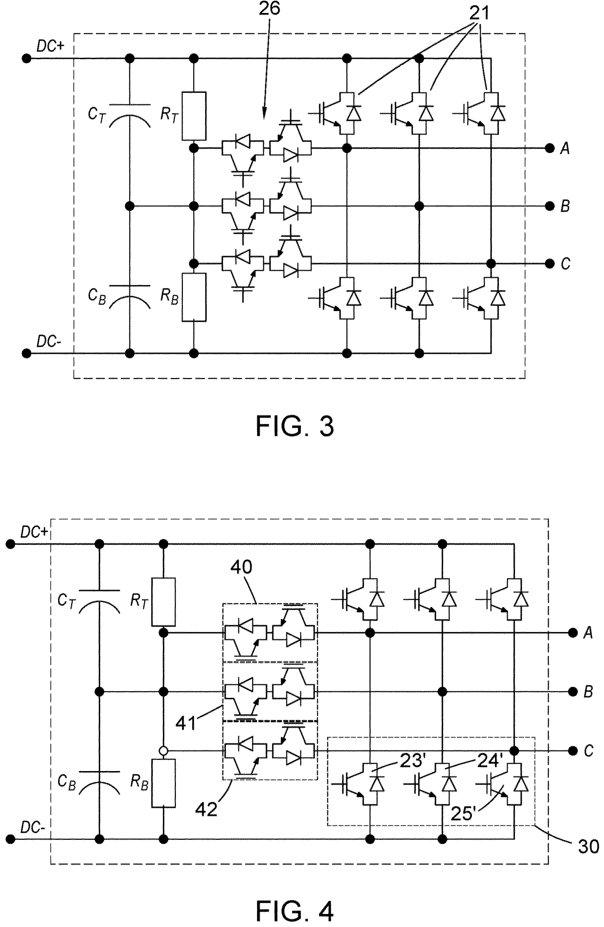

A three-phase two-level topology is shown in Fig. 1, where each phase can have a DC+ or a DC- output. One popular topology for a multilevel power converter is a three-level T-type topology such as shown in Fig. 3, where each phase leg consists of power switches 3a, 3b, 3c and 3d. For the positive voltage phase, the first switch, 3a, is always on, switches 3b and 3c switch on and off in a complementary fashion and switch 3d is off. For the negative voltage phase, switch 3b is permanently on, switches 3a and 3d work as a complementary pair and 3c is off. This operation provides the step-wise voltage used to provide the multiple output levels. The control of the switches is coordinated by a controller and the switches are switched by their respective gate drivers (not shown). The topology shown here is for a three-level converter and provides three different levels at the outputs A, B and C.

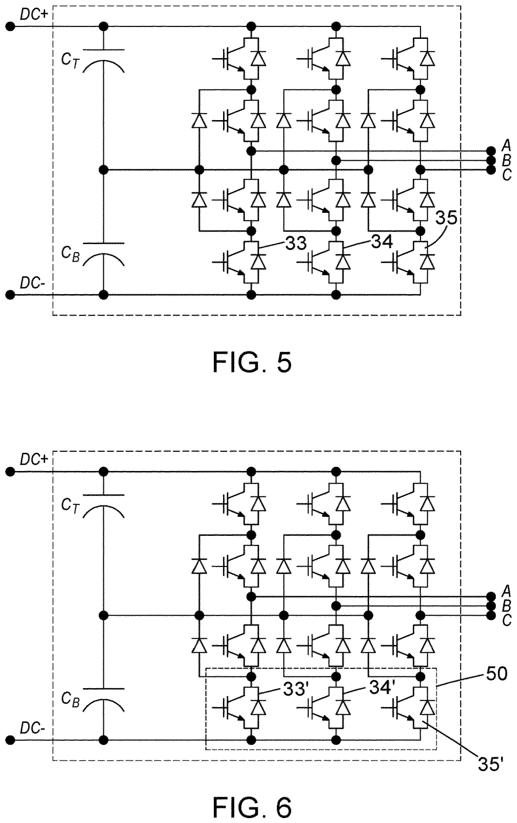

An alternative topology is the so-called D-type NPC (neutral-point clamped) topology, clamped by diodes, as shown in Fig. 5.

These are just some examples of known multilevel power converters. Multilevel converters having more than three levels and also more than three phases, e.g. five-phase, seven-phase etc. are also known.

Typically, to monitor current in the circuit, current sensors are provided at each of the three output lines a, b, c (the current sensors are not shown here in Fig. 1). Other solutions include current sensors at other positions in the circuitry.

Conventionally, for all of these two-level and multiple level topologies, each switch has been provided with its one power supply unit, as has each desaturation circuits, where present, to address problems of shoot-through. Each power supply unit is rated to provide enough power for the respective component to operate 100% of the time of operation of the power converter. As power converters become more complex and provide more levels, the number of components and ancillary circuitry greatly increases the overall size, weight and cost of the converter.

There are some possibilities of reducing the number of power supplies of simple topologies such as shown in Fig. 1 to Fig. 6 as discussed below, but even then, the converter still requires a large number of power supply units.

The present inventors have considered the possibility of moving components around within the topology in a previously unconsidered manner to enable some components to share power supplies, where the 100% rating is not necessarily required. Based on this premise, different components in the different topologies can be clustered to share power supplies whilst maintaining any necessary isolation between different parts of the converter.

The concept of the disclosure will be explained further with reference to the examples in the drawings.

For a two-level power converter such as shown in Fig. 1, for example, it can be seen that using conventional design approaches, each of the six switches 10, 11, 12, 13, 14, 15 would require its own power supply (or isolated gate drive). Current sensors (not shown) would typically be provided at each output 16, 17 and 18, each of which would also require its own power supply. For a standard three-phase two-level converter, therefore, there would need to be nine power supply units. Applying the concept of this disclosure, in the two-level topology of Fig. 1, a single power supply unit could be shared by the bottom three switches 13', 14', 15' - i.e. these switches could form a cluster 20 sharing a power supply for their gate drivers. This would reduce the overall number of power supply units by two (to seven). This can be seen in Fig. 2.

A standard three-phase three-level T-type converter such as shown in Fig. 3 would require a total of 14 power supply unit: (three for the top level switches 21, three for the bottom level switches 23, 24, 25, three for the three sets of middle branch switches 26, two for input i.e. capacitor voltage sensors, and three power supply units for the current sensors at the output (not shown). For a three-level T-type topology as shown in Fig. 3, again, applying the concept of the disclosure, the bottom three switches 23, 24, 25 could form a cluster 30 to share a power supply (see Fig. 4). The middle-branch back-to-back switches could also form clusters 40, 41, 42

A three-phase three level NPC topology such as shown in Fig. 5 would typically require 17 power supply units - one for each of the 12 switches, to for input capacitor voltage sensing and three for output current sensors. Again, if the bottom three switches 33, 34, 35 were to be clustered (switches 33', 34', 35' in a cluster 50 sharing a power supply), as shown in Fig. 6, the converter would then require 15.

By intelligently grouping components of the power converter topology to share power supply units between a component used for switching and a component used for sensing in isolated clusters, based on the understanding that these would not be on at the same time, a simpler more compact topology is possible.

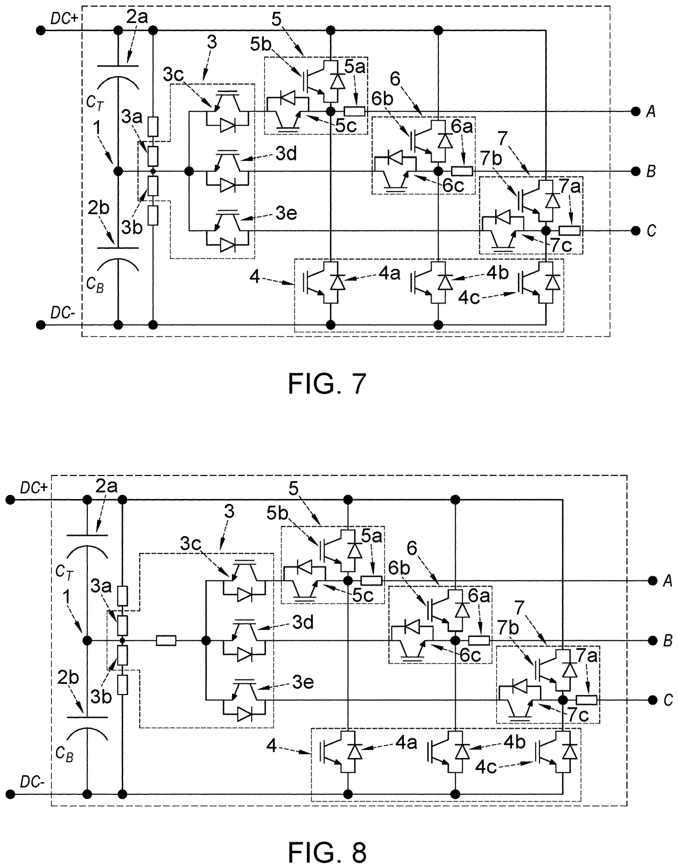

For example, Fig. 7 shows how a three-phase three-level T-type converter could be designed to cluster the components in a common-drain/common-collector arrangement, in a way to ensure isolation between switches that need to be isolated, but to share a power supply between components that can be clustered. This requires a slight rearrangement of the components but this does not affect the function. The approach makes use of the fact that the midpoint branches are built with back-to-back switches connected in a common drain/emitter configuration. This allows the extra voltage and current components to share the same insulation barriers with existing gate driver circuitry.

In the example shown, for the first phase leg, it can be seen that top switch 5b is combined with middle branch switch 5c and output current sensor 5a into a single cluster 5 that shares a common power supply (not shown). The same is for the top switch 6b, middle branch switch 6c and output sensor 6a of the second leg and the top switch 7b, middle branch switch 7c and output sensor 7a of the third leg. The top and middle branch switches and the output current sensor are not all required to be powered at the same time. A separate (isolated) cluster is formed from the other middle branch switch of all three limbs (3c, 3d, 3e, together with two input voltage sensors 3a, 3b forming cluster 3 which has a shared power supply (not shown). The three bottom switches 4a, 4b and 4c are also grouped into a cluster 4. The topology now, therefore, only requires five isolated power supply for the gate driver units of the switches.

A similar grouping can be applied to a three-phase three-level T-type topology with shoot-through protection such as described in US 11,119159 and shown in Fig. 8 which can also be clustered to require only five power supply units.

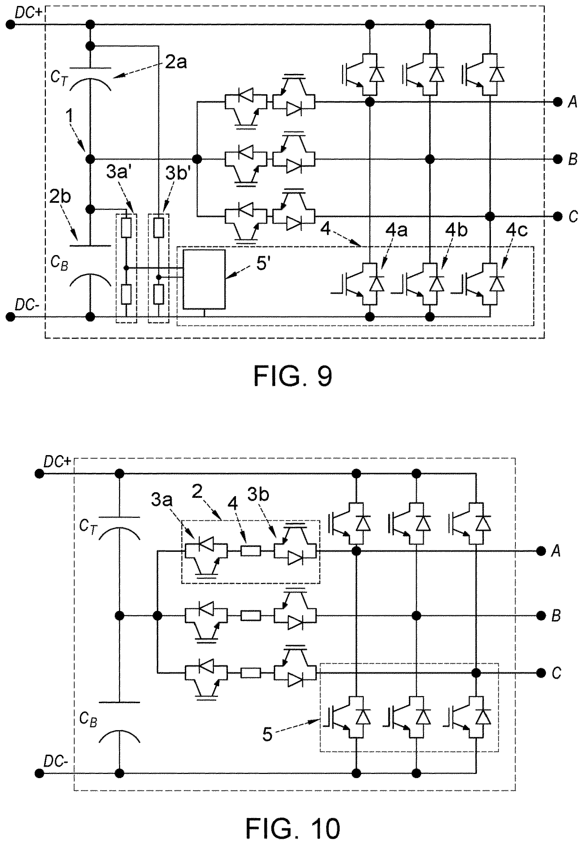

An alternative grouping of the T-type topology is shown in Fig. 9, where the capacitor voltage sensors can be clustered to share a power supply with the bottom three switches thus reducing the number of power supplies to seven.

An alternative, shown in Fig. 10, is a topology described in another application of the inventors filed on the same day as this application, in which the output current sensors are replaced with current sensors located in the middle branches between the switches. In this case, we can reduce the number of required gate driver power supplies to seven, since the output current sensors are grouped together with the middle branch switches of the respective limbs and the bottom three switches can be grouped together and share a power supply with the input capacitor voltage sensors.

Multiple other groupings are possible provided switches that are required to operate at the same time are isolated from each other and do not share a power supply with each other. The concept is, however, best suited to lower power converters (<10 kW) that use an embedded die concept with low stray inductance and for small motor drive applications.

## Claims

1. A method of designing a multilevel power converter having a DC bus with a positive terminal and a negative terminal, a plurality of switches between the DC bus and a plurality of outputs, and one or more current sensors, whereby one or more switches and/or one or more current sensors are grouped in clusters sharing a common power supply.

2. The method of claim 1, wherein a cluster comprises a plurality of switches configured to be on at different times.

3. The method of claim 1 or 2, wherein a cluster comprises one or more switches and one or more current sensors.

4. The method of any preceding claim for designing a three-phase T-type power converter in which, for each phase leg of the power converter, a cluster is formed of switches connected to each other in a common drain/emitter configuration.

5. The method of claim 4, in which a cluster also includes a current sensor.

6. The method of claim 4 or 5 in which another cluster comprises a plurality of current sensors.

7. A multilevel power converter comprising:
a DC bus having a positive terminal and a negative terminal;
a plurality of switches for each of a plurality of phase legs of the power converter connected between the positive terminal and the negative terminal, each power leg having an output for provided a converted voltage output according to the switching control of the plurality of switches; and
one or more current sensors (4), wherein at least two of the switches, or at least one of the switches and a current sensor, and/or at least two current sensors are connected as a cluster to share a common power supply.

8. The multilevel power converter of claim 7, wherein the one or more current sensors (4) is a shunt resistor.

9. The multilevel power converter of claim 7 or 8, wherein a current sensor in each phase leg and a pair of adjacent switches form a cluster sharing a common power supply.

10. The multilevel power converter of claim 7 or 8, wherein a current sensor in each phase leg and a pair of adjacent switches form a cluster sharing a common isolation boundary.

11. The multilevel power converter of any of claims 7 to 10 being a three-phase T-type power converter having, for each phase leg, first and second switches (3a, 3b) connected in series between the positive and the negative terminal, a third switch (3c) between the series connected first and second switches and the positive terminal and a fourth switch (3d) connected first and second switches and the negative terminal.

12. The multilevel power converter of any of claims 7 to 10, being a D-type NPC power converter.

13. The multilevel power converter of any of claims 7 to 12, being a three-phase three-level power converter.

14. The multilevel power converter of any preceding claim further comprising a controller for controlling switching of the plurality of switches.

15. The multilevel power converter of claim 10, wherein the controller is a pulse width modulator, PWM, controller.
